Europäisches Patentamt

European Patent Office

Office européen des brevets

(19)

(11) Publication number: **0 090 015**

**B1**

(12) **EUROPEAN PATENT SPECIFICATION**

(45) Date of publication of patent specification: **12.08.87**

(51) Int. Cl.⁴: **B 65 D 1/02**

(21) Application number: **82903116.0**

(22) Date of filing: **22.09.82**

(86) International application number:
**PCT/US82/01300**

(87) International publication number:
**WO 83/01052 31.03.83 Gazette 83/08**

(54) **CONTAINER HAVING INTEGRAL CAP.**

(30) Priority: **28.09.81 US 306550**

(43) Date of publication of application:
**05.10.83 Bulletin 83/40**

(45) Publication of the grant of the patent:
**12.08.87 Bulletin 87/33**

(84) Designated Contracting States:
**AT BE CH DE FR GB LI LU NL SE**

(56) References cited:
**DE-A-1 757 673**
**GB-A- 935 117**
**US-A-3 187 966**
**US-A-4 231 486**
**US-A-4 260 065**

(73) Proprietor: **PARADIS, Joseph R.**
**60 Plymouth Road**
**Holden, MA 01520 (US)**

(72) Inventor: **PARADIS, Joseph R.**
**60 Plymouth Road**
**Holden, MA 01520 (US)**

(74) Representative: **Siebert . Grättinger & Bockhorni**
**Postfach 1649 Almeidaweg 35**
**D-8130 Starnberg (München) (DE)**

Courier Press, Leamington Spa, England.

## Description

The invention relates to a container with an integral cap comprising a plug extending from said cap through a wall of said container, the extension of said plug limiting the movement thereof with respect to the wall of said container during shipment and handling, said wall having a weakened region that becomes deformed and severed when said cap is depressed toward said container or rotated.

Such a container is disclosed in US—A—4 260 065.

Containers with integral caps are widely used. They provide a storage compartment in which the contents remain completely sealed until they are ready for use. At the time of use the cap is severed from the associated container, typically by cutting, torsional shearing or by bendably breaking the cap from the container.

The severing process required with ordinary integral cap containers often poses difficulties and inconvenience. Cutting implements are not always available, and their cutting action can damage the cap and interfere with the subsequent closure of the container. In the case of caps that require a twisting or breaking action, substantial force can be required. The twisting and breaking action can also damage the interface between the cap and its associated container. The result is interference with subsequent closure. In some cases the amount of twisting and breaking force can be so great, severance is not easily achieved and additional measures are required.

It is known to provide containers with the cap being depressable into the container (US—A—4 260 065). Thereby severance of the cap is comparatively simple, but there is a significant danger of inadvertant breakage during handling and shipment.

Therefore, the invention is based on the problem to provide an integral cap container being resistant to inadvertant breakage and damage during handling and shipment and being reusable.

With respect to an integral cap container as mentioned at the beginning, this problem is solved in that the extension of said plug is limited to a displacement of less than about 30 degrees during the occurrence of inadvertant forces applied to said cap, said displacement being limited by the occurrence of contact of said plug extension with said wall, and that said plug contains a sealing groove between said cap and said wall.

Thus, in accordance with the invention, the extended plug, within the container, is proportioned with respect to the side walls of the container so that inadvertent forces applied to the cap will cause a limited side motion of the extended plug into contact with a stop associated with the side wall of the container. Because the amount of side motion of the cap is severely limited, the danger of inadvertent breakage and separation is significantly curtailed.

Moreover the wall through which the plug extends is weakened in such a way that it forms an aperture with a rounded shoulder when the cap is rotated, or depressed towards the container. As a result, the need for severing is eliminated and the cap is easily severed from the container by the simple action of depressing the plug into the container or rotating it. In addition, the weakened region leaves a ring on the plug which engages a mating groove of the container to promote the reusable seal that is provided by the invention.

The container is easily produced by the molding of plastic material with the container body extending to the plug and the cap attached to a runner system. This construction is easily realized by the injection molding of plastic materials such as nylon, polypropylene and polyethylene.

Description of the Drawings

Other aspects of the invention will become apparent after considering several illustrative embodiments, taken in conjunction with the drawings in which:

Figure 1 is a perspective view of a container integrated to a cap by a plug in accordance with the invention;

Figure 2A is a cross-sectional view of the plug portion of the integral cap and plug container of Figure 1 showing the extension of the plug into the container to limit the possibility of inadvertent separation of the plug from the container;

Figure 2B is a cross-sectional view of the plug portion of the container after the plug has been pushed into the container and the cap removably secured to the aperture formed in the container;

Figure 3 is a plan view of a set of integral cap containers molded using a runner system in accordance with the invention;

Figure 4A is a sectional view of an alternative cap and plug in accordance with the invention;

Figure 4B is a further sectional view of the integral cap and plug of Figure 4A after the plug has been pushed into its associated container;

Figure 4C is a cross-sectional view of Figure 4A taken along the lines 4C—4C;

Figure 5A is a sectional view of a further alternative cap and plug in accordance with the invention; and

Figure 5B is an enlargement of the central portion of the cap and plug of Figure 5A.

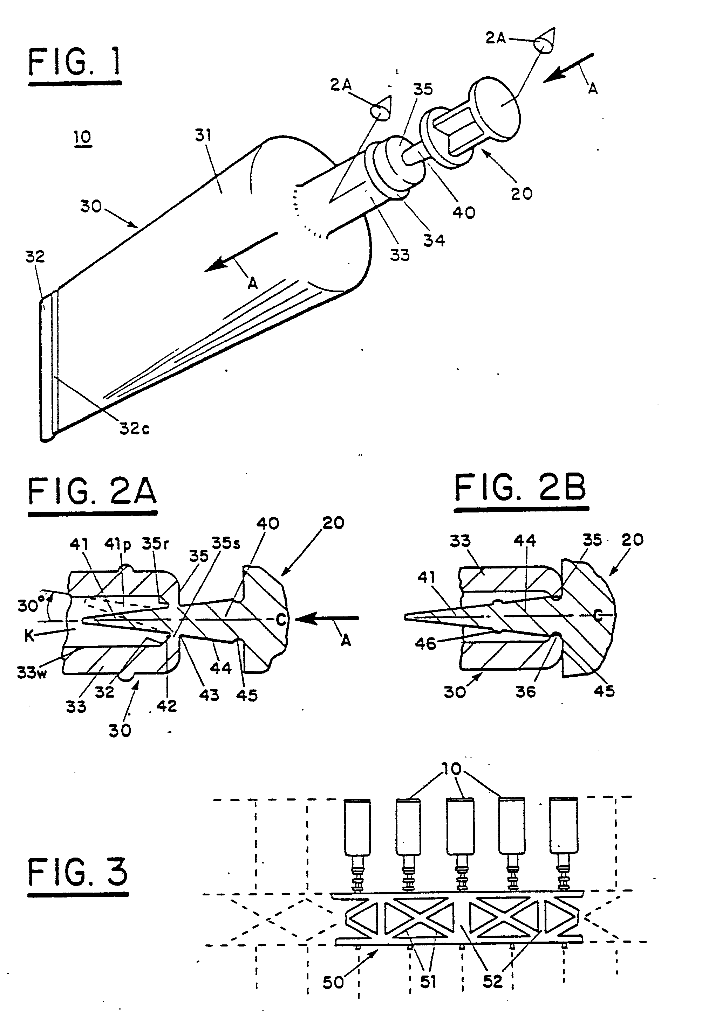

With reference to the drawings, an integral cap container 10 in accordance with the invention is shown in Figure 1 with a cap 20 secured to a body 30 by a plug 40. In the particular embodiment of Figure 1, the body 30 is a cylindrical tube 31 with a sealed base 32 and a projecting neck 33. The base 32 can be sealed in any convenient way, for example by a crimp 32c.

The neck 33 of the integral cap container 10 is for convenience only. It will be understood that the cap 20 may be integrated at the end, the latter advantageously includes a gripper ring 34 that encircles the neck below the end wall 35.

For the embodiment of Figure 1, the cap 20 is integrated with the body 30 by a plug 40 at the wall 35.

As demonstrated in Figures 2A and 2B, the container 10 is such that interior access is easily achieved by merely pushing the cap towards the body 30 in the direction of the arrow A. Application of the desired thrust is facilitated by holding the gripper ring 34 between the thumb and index finger. The cap 20 can be similarly gripped.

Structural details of the integration of the cap 20 with the end wall 35 by the plug 40 are pictured in Figure 2A. The end wall 35 has an interior surface with a recess as a weakened region 35r which encircles the extension 41 of the plug 40. A second recess as a weakened region 35s can also be included to promote the desired severance of the wall 35 in accordance with the invention. Similarly, the wall 35 includes an inner taper at an angle of about 60° with respect to the outer surface of the end wall 35. In particular, the end wall 35 and the depth of the recess 35r is desirably less than one-third of the thickness of the container walls elsewhere. The depth of the second recess 35s is preferably about one-half of the wall thickness next to the plug.

In order to promote the action of the plug 40, it forms sharp corners where it enters and leaves the end wall 35. In particular, the entry angle 42 is greater than 90° and the exit angle 43 is slightly less than 90°.

The extension 41 is also rounded to facilitate the re-entry of the plug 40 into the neck 33 on resealing.

More importantly, the extension 41 is of greater length, commencing at the interior of the end wall 35 than the width of the channel K in the neck 33. In the embodiment of Figure 2A, the extension 41 is sufficiently long that any thrust applied to the cap 20 will produce a maximum deviation of the extension 41 from the axis A of 30°. As a result inadvertent movement of the cap during shipment and handling is unlikely to cause breakage of the plug and unintended loss of the container contents. The security of the cap 20 is promoted by the extent to which the angle of possible displacement of the extension 41 from the center line C is less than 30° before the displaced tip comes into engagement with the inner side wall 33w of the neck 33 as illustrated by the phantom extension 41p.

The outer wall 44 of the plug 40 tapers outwardly from its center line C. When the cap 20 is pushed towards the container, there tends to be a rounded shearing of the wall 35, creating an aperture with a rounded rim 36 that seats into the circumferential sealing groove 45 of the plug 40 as shown in Figure 2B.

Also shown in Figure 2B is a rim 46 that is created between the extension 41 and the body of the plug 40. This rim 46 serves as a baffle to deflect any liquid contents of the container away from the seat between the circumferential groove 45 of the plug and the circumferential rim 36 created in the end wall 35 of the container 30. In addition, the rim 46 limits the extent of axial movement of the plug 20 with respect to the center line C after the plug has been seated in the circumferential rim 36.

It will be apparent that the invention permits the reusable use of the container body 30 and avoids the need for a cutting instrumentality, or any torsional shearing or breakaway action which could damage the interface between the cap 20 and the container body 30, and consequently interfere with any subsequent sealing. More significantly, the extension tip 41 provided in accordance with the invention limits the possibility of inadvertent breakage of the plug and consequent loss of the container contents during shipment and handling of the container. The invention further achieves a relatively tight seal between the rim 36 and the plug 40.

The invention is readily implemented by molding in accordance with the structure shown in Figure 3. Individual integral cap containers 10 are attached to a runner system 50 and produced by injection molding of suitable plastic materials including nylon, polypropylene and polyethylene.

The runner system 50 is the result of channels provided in the mold for the containers 10 to permit the plastic material to flow to the cavities of the individual containers. Ordinarily the runner system is provided by a cylindrical mold channel which acts as the main passage for the flow of plastic material through branched channels for the individual container cavities.

In the particular configuration of Figure 3 however, the runner system 50 is in the form of a ladder with cross connectors 51 and rungs 52. This facilitates the flow of plastic during molding. At the same time there is additional strength in the runner system to enable further processing after molding. In some cases the additional strength provided by the runner guards against inadvertent damage to the structure as well as the inadvertent depression of the cap into the container. In other cases, the additional strength provided in the runner system permits the cap to be automatically depressed into the container where that is desired for the final product. The components of the ladder structure may be of any convenient cross section, but are desirably of circular cross section for the rails at which the containers are connected as well as for the cross connectors 51 and the rungs 52.

The mold also includes an insert for each container in accordance with its interior configuration.

In an illustrative embodiment of the invention, the plug 40 had a taper of approximately 8° away from the extension tip 41 and an internal diameter at the sealing groove of about 1.0414 mm (0.041"). The diameter of the plug at its intersection with the exterior of the recess 35r was approximately 0.9906 mm (.039"). The extension tip 41 had a radius of approximately 3.048 mm (0.12") at a center approximately 0.3048 mm (.012") from the outside surface of the end wall 35 on the center line C. The weakened wall thickness was approximately 0.254 mm (0.010"), forming an angle of approximately 60° at the end of the recess 35r. The width of the channel K in the neck 33 was approximately 1.524 mm (.060") and the length of the extension tip 41 from the recess 35r was approximately 2.54 mm (.100").

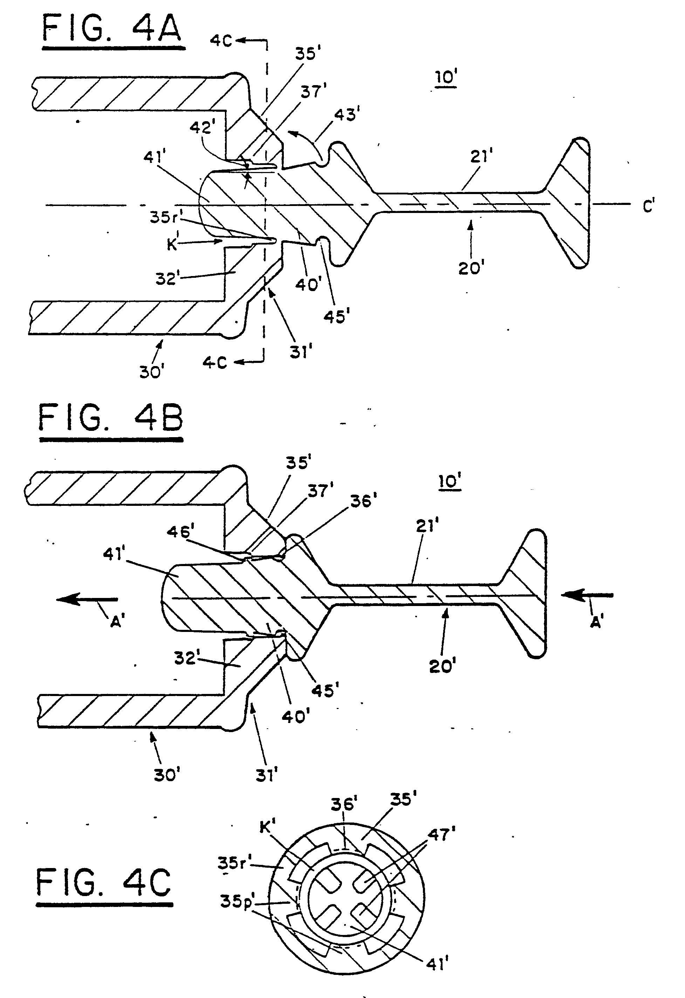

An alternative embodiment 10' of the invention is shown in the partial sectional view of Figure 4A. The cap 20' is secured integrally to a body 30' by a plug 40'. The body has a collar 31' that extends to side walls. The container body can have a base (not shown) of convention construction.

The cap 20' is integrated with the body 30' at a wall 35' which originates at the collar 31' and extends to and into the plug 40'. In addition, the collar 31' has its wall 35' thickened to provide a narrow channel K' with respect to and surrounding the extension tip 41'. In the particular embodiment of Figure 4A the extension tip 41' has a length greater than the maximum diameter of the ring at the opening into the channel K'. The proportions of the plug 40' are further restricted to permit a maximum departure from the center line C' of about 30° in the case of any inadvertent force applied to the cap 20' during shipment and handling. The wall 35' further includes indentations 37' in the surface facing the extension tip 41'. These are provided, as demonstrated below, to assist in securing the plug 40' in the container body when the cap 20' is purposely depressed into the collar 31'.

As further indicated in Figure 4A, the connection between the collar 31' and the plug 40' by the wall 35' is in the form of a wedge with side walls forming respective angles 42' and 43' with respect to the intersected walls of the plug 40'. In the particular embodiment of Figure 4A the angle 42' is less than the angle 43'. Both of the angles 42' and 43' are less than 90° with the angle 42' being slightly greater than 45° and the angle 43° being less than 30°. In an illustrative embodiment, the angle 42' ranged between 70° and 80° and the angle 43' ranged between 0° and 45°.

The structure 10' is configured such that the contents of the body 30' are inaccessible until the plug 40' has been pushed into the body 30'. As indicated in Figure 4B, this is accomplished by applying thrust to the cap 20' in the direction indicated by the arrows A'. The direction of thrust is along the longitudinal axis of the cap 20' which serves also as the center line of the opening created in the collar 31' when the plug 40' is forced into the body. Where desired, a recess (not shown) can be included at the annular recess 35r' (Figure 4A) on the interior surface of the collar 31' at the plug 40'. The provision of the desired thrust is promoted by the inclusion of a flat 21' on the cap 20'. When the plug 40' has been depressed into the collar 31', it leaves a slight annular protuberence 46' on the extension tip 41' of the plug 40' and the rim 36' is created which seats and seals the depressed grove 45' provided between the plug 40' and the adjoining flange of the cap 20'. Because of the orientation of the wedge intersection of the collar 31' with the plug 40', the rim 36' tends to have a rounded shoulder which meshes with a corresponding rounded portion of the annular protuberance 46'. Consequently, in those cases where a complete seal of the cap 20' with respect to the body 30' is not initially required, the manufacturing operation that gives rise to the structure 10' can include the step of forcing the cap 20' into the body 30' to achieve, as a final product, the structure shown in Figure 4B. The annular protuberance 46' can then serve a wiping function when the cap 20' is reinserted into the body 30' after usage of the structure 10'.

It is to be further noted that in the embodiment of Figure 4B the annular protuberance 46' seats into the recess 37' in the interior wall of the collar 31'. This promotes the sealing engagement of the plug 40' with the container 30'. In addition, as indicated in the cross-sectional view of Figure 4C, the collar 31' has its wall 35' in two portions, a ring 35r' and a projection 35p', which form the desired channel K' between the extension tip 41' and the wall 35'. The amount of material used for the extension tip 41' can be reduced by the introduction of grooves 47' which are disposed on the extension tip 41' so as not to interfere with the limited angular displacement of the tip until there is engagement with the wall 35' (at the projections 35p'), in accordance with the invention. In the particular embodiment of Figure 4C there are four such grooves 47' which are positioned along opposite ends of the intersection diameters which flank the projections 35p'.

A further alternative embodiment 100 of the invention is shown in the partial sectional view of Figure 5A. The cap 200 is secured integrally to a body 300 by a plug 400. The body has a collar 310 that extends to side walls. The body can have a base (not shown) of conventional construction.

The cap 200 is integrated with the body 300 at a wall 350 which originates at the collar 310 and extends to, and into, the plug 400. In addition, the collar 310 has its wall 350 thickened to provide a relatively narrow channel 380 with respect to and surrounding the extension tip 410. As in the prior embodiment the extension tip 410 within the channel 380 has a length that is greater than the maximum diameter of the channel 380 at the comparatively thin membrane 351 that extends into the extension tip 410. Also, as with the prior embodiment, the proportions of the plug 400 are further restricted to permit a maximum departure from the center line CC of about 30 degrees in the case of any inadvertent force applied to the cap 200 during shipment and handling. In addition, the interior surface of the collar 310 is frustoconical as compared with the cylindrical interior surfaces in the prior embodiment. As seen in Figure 5A the frustoconical surface 311 which surrounds the extension tip 410 has less of a taper than the ensuing frustoconical surface 312 which interconnects the tip portion of the collar 310 with the remainder of the body.

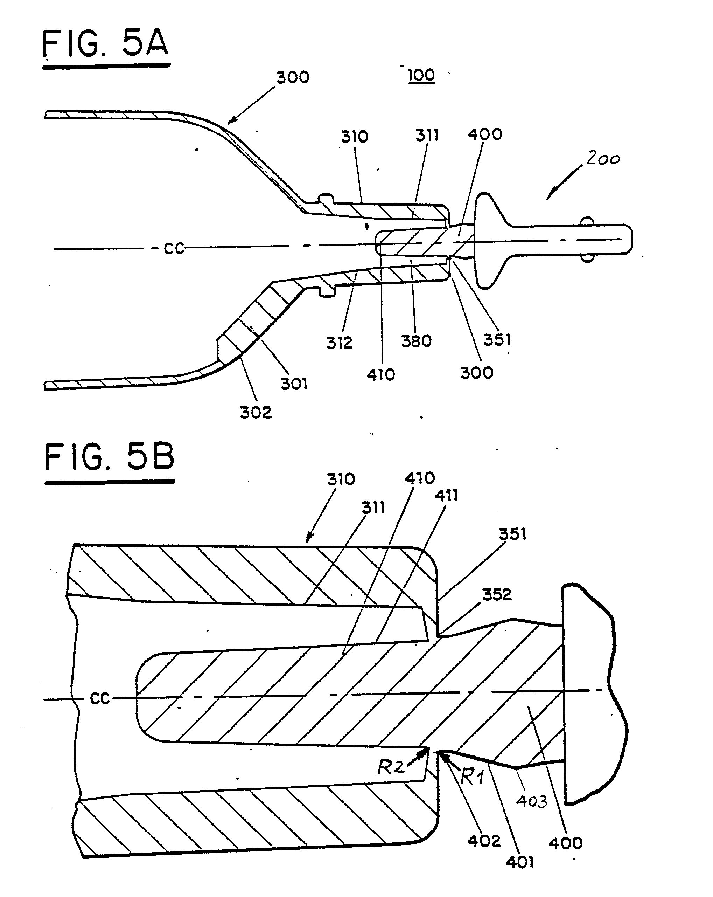

In addition, as shown in greater detail in Figure 5B, the thin membrane 351 extends as an outwardly diverging wedge from the extension tip 410 towards the surface 311. To assure the desired rupture of the membrane 351 when the plug 400 is depressed into the collar 310, there is a step 352 between the surface 401 of the plug 400 and the surface 411 of the extension tip 410. The surface 401 at the outside of the membrane 351 has a radius R1 which is greater than that of the radius R2 of the surface 411 at the inside position of the membrane 351. In a working model of the invention the radius R1 was about 0.762 mm (0.030 inches) while the radius R2 was about 0.7112 mm (0.028 inches).

The desired rupture of the membrane is further promoted by the inclusion of a flat 402 immediately adjoining the outer surface of the membrane 351. In a working model of the invention the flat 402 extended approximately 0.127 mm (0.005 inches). Beyond the flat 402 the plug surface 401 lies along an angle of inclination that is illustratively on the order of 15 degrees. At an apex 403 it proceeds along an angle of declination illustratively on the order of about 10 degrees. At the apex 403 there is a desired rounding, for example formed by a radius on the order of 0.254 mm (0.010 inches). The outer surface of the membrane 351 desirably forms a right angle with respect to the central axis CC. The inner surface of the membrane 351 illustratively forms an angle with respect to the outer surface, and therefore relative to a segment perpendicular to the central axis CC, on the order of 10 degrees.

It is to be further noted with respect to Figure 5A that the body 300 includes an internal fin 301 which projects inwardly from the outer wall 302 and serves as an orientation, as well as a driving, rib for the manipulation of the body 300. For that purpose the fin or rib 301 has a width on the order of the wall thickness of the body. It will be appreciated that the thickness of the fin 301 may be adjusted according to the required postprocessing of the container 100.

Because of the configuration of the tip 410 with respect to the collar 310 and the membrane 351, the container 100 resists inadvertent rupture of the membrane 351 during handling and shipment. However, when access to the interior contents of the container 100 is desired, this is easily achieved by depressing the cap 200 in the direction of the internal central axis CC. Because of the interrelation of the constituents forming the cap enclosure, a relatively slight pressure inwardly directed along the central axis CC suffices to rupture the membrane in a way that permits subsequent resealing of the container without leakage of its interior contents after the desired rupture has taken place.

It is to be emphasized that the membrane which holds the cap to the container is deliberately proportioned, so that the cap is easily severed by rotation, but resists severing by sideward forces, pulling forces and pushing forces of the kind frequently encountered in shipment and handling, which often produce undesired and inadvertent rupture.

## Claims

1. A container with an integral cap (20) comprising a plug (40) extending from said cap (20) through a wall (35) of said container (10), the extension (41) of said plug (40) limiting the movement thereof with respect to the wall (35) of said container (10) during shipment and handling, said wall having a weakened region (35r, 35s) that becomes deformed and severed when said cap (20) is depressed toward said container (10), or rotated, characterized in that the extension (41) of said plug (40) is limited to a displacement of less than about 30 degrees during the occurrence of inadvertent forces applied to said cap (20), said displacement being limited by the occurrence of contact of said plug extension (41) with said wall (35), and that said plug (40) contains a sealing groove (45) between said cap (20) and said wall (35).

2. Container in accordance with claim 1 wherein said container includes a neck having an interior opening which does not exceed the length of said extension (41).

3. Container in accordance with claim 1 or 2 wherein said wall (35) and said extension (41) form a channel (K) which is narrower than the length of said plug (40).

4. Container in accordance with any of claims 1—3 wherein said plug (40) has a conical shape with walls which diverge away from the connection of said plug (40) to said wall (35).

5. Container in accordance with any of claims 1—4 wherein said weakened region includes a plurality of recesses (35r, 35s) having different widths.

6. Container in accordance with any of claims 1—5 wherein said wall (35) is the end portion of said container (10).

## Patentansprüche

1. Ein Behälter mit einer integralen Kappe (20), welche einen Dorn (40) aufweist, der sich von der Kappe (20) durch eine Wand (35) des Behälters (10) erstreckt, wobei eine Verlängerung (41) des Dorns (40) dessen Bewegung gegenüber der Wand (35) des Behälters (10) während des Transports und Gebrauchs begrenzt und wobei die Wand eine Schwachstelle (35r, 35s) aufweist, welche deformiert und durchtrennt wird wenn die Kappe (20) gegen den Behälter (10) gepreßt oder verdreht wird, dadurch gekennzeichnet, daß die Verlängerung (41) des Dorns (40) in deren Bewegung auf weniger als 30° infolge Einwirkung unbeabsichtigter Kräfte auf die Kappe (20) begrenzt ist, nämlich dadurch, daß die Verlängerung (41) an der Wand (35) zur Anlage gelangt, und daß der Dorn (40) eine Dichtungsnut (45) zwischen der Kappe (20) und der Wand (35) aufweist.

2. Behälter nach Anspruch 1, dadurch gekennzeichnet, daß er einen Hals mit einer Innenbohrung aufweist, welche kleiner ist als die Länge der Verlängerung (41).

3. Behälter nach Anspruch 1 oder 2, dadurch gekennzeichnet, daß die Wand (35) und die Verlängerung (41) einen Kanal (K) bilden, welcher enger ist als die Länge des Dorns (40).

4. Behälter nach einem der Ansprüche 1 bis 3, dadurch gekennzeichnet, daß der Dorn (40) konisch geformt ist, indem er ausgehend von der Verbindung zwischen dem Dorn (40) und der Wand (35) sich zunehmend verjüngt.

5. Behälter nach einem der Ansprüche 1 bis 4, dadurch gekennzeichnet, daß die Schwachstelle durch mehrere Einschnürungen (35r, 35s) gebildet ist.

6. Behälter nach einem der Ansprüche 1 bis 5, dadurch gekennzeichnet, daß die Wand (35) das Ende des Behälters (10) bildet.

**Revendications**

1. Récipient avec capsule solidaire (20) qui présente une broche (40) qui s'étend, de la capsule (20), à travers une paroi (35) due récipient (10), un prolongement (41) de la broche (40) limitant le mouvement de celle-ci relativement à la paroi (35) du récipient (10) pendant le transport et l'utilisation, et la paroi présentant un endroit faible (35r, 35s) qui se déforme et se sépare quand on pousse la capsule (20) contre le récipient (10) ou qu'on la fait tourner, caractérisé en ce que le prolongement (41) de la broche (40) est limité dans son mouvement à moins de 30° par suite de l'action de forces non voulues sur la capsule (20), à savoir par le fait que le prolongement (41) vient s'appliquer contre la paroi (35) et que la broche (40) présente une gorge d'étanchéité (45) entre la capsule (20) et la paroi (35).

2. Récipient selon la revendication 1, caractérisé en ce qu'il présente un col ayant une perforation intérieure qui est plus petite que la longueur du prolongement (41).

3. Récipient selon l'une des revendications 1 et 2, caractérisé en ce que la paroi (35) et le prolongement (41) forment un canal (K) qui est plus étroit que la longueur de la broche (40).

4. Récipient selon l'une des revendications 1 à 3, caractérisé en ce que la broche (40) est de forme conique, en ce sens qu'en partant de la liaison entre la broche (40) et la paroi (35), elle s'amincit de façon croissante.

5. Récipient selon l'une des revendications 1 à 4, caractérisé en ce que l'endroit faible est formé par plusieurs rétrécissements (35r, 35s).

6. Récipient selon l'une des revendications 1 à 5, caractérisé en ce que la paroi (35) forme l'extrémité du récipient (10).

# FIG. 1

10

30

31

32

32c

2A

2A

35

34

33

40

20

A

A

# FIG. 2A

41  41p  35r  35  35s  40  20

30°

K

33w

33

32

30

42

43

44

45

C

A

# FIG. 2B

33  44  35  20

41

46

30  36  45

C

# FIG. 3

10

50

51

52

FIG. 4A

FIG. 4B

FIG. 4C

0 090 015

# FIG. 5A

# FIG. 5B

3